# EUROPÄISCHE PATENTSCHRIFT

(11) **EP 2 576 647 B1**
(45) Veröffentlichungstag und Bekanntmachung des Hinweises auf die Patenterteilung: **10.12.2014**
(21) Anmeldenummer: 11718663.5
(22) Anmeldetag: 27.04.2011
(51) Int. Cl.: C08G 18/08, C08G 18/12, C08G 18/32, C08G 18/44, C14C 11/00, C08G 18/36, C08G 18/66, C09D 175/02, C09D 175/04

(54) **WÄSSRIGE POLYURETHAN-POLYHARNSTOFF-DISPERSIONEN**
AQUEOUS POLYURETHANE-POLYUREA DISPERSIONS
DISPERSIONS AQUEUSES DE POLYURÉTHANE ET POLYURÉE

(30) Priorität: 25.05.2010 DE 102010021465
(43) Veröffentlichungstag der Anmeldung: 10.04.2013
(73) Patentinhaber: Stahl International B.V., 5145 PE Waalwijk (NL)
(72) Erfinder: MÜNTER, Jürgen, 71336 Waiblingen (DE); FISCHER, Thomas, 72660 Beuren (DE)
(74) Vertreter: Jansen, Cornelis Marinus
(86) Internationale Anmeldenummer: PCT/EP2011/002098
(87) Internationale Veröffentlichungsnummer: WO 2011/147519

(56) Entgegenhaltungen:
- EP-A1- 1 582 542
- EP-A1- 2 067 803
- WO-A1-2009/144157
- DE-A1- 3 730 780
- DE-A1- 4 022 539

## Beschreibung

Die vorliegende Erfindung bezieht sich auf wässrige Polyurethan-Polyharnstoff-Dispersionen und ein Verfahren zu ihrer Herstellung, die als Teil der Beschichtung eines flexiblen Flächensubstrates verwendet werden können. Sie verbessern dessen Anschmutzverhalten und Reinigungsfähigkeit.

Die Herstellung von wässrigen Polyurethan-Polyharnstoff-Dispersionen mittels des Prepolymer-Ionomer-Verfahrens oder des Acetonverfahrens ist seit langem bekannt, z. B. aus Prog. Org. Coat. 9 (1981) 281 - 340. Hierbei wird ein isocyanatgruppenhaltiges Prepolymer in Substanz oder in Lösung hergestellt und gegebenenfalls nach Durchführung der Reaktion in Lösemitteln gelöst. Anschließend wird das Prepolymer oder die Prepolymerlösung in Wasser dispergiert und eine Kettenverlängerungsreaktion mit Polyaminen durchgeführt. Die Verlängerungsreaktion kann teilweise oder auch komplett vor dem Dispergieren erfolgen. Abschließend wird gegebenenfalls das Lösemittel abdestilliert.

WO-2009/144157 offenbart ein Verfahren zur Herstellung schaum-stabilisierender wässriger Polyurethan-Polyharnstoff-Dispersionen, bei dem
A) zunächst ein NCO-gruppenhaltiges Polyurethan-Prepolymer - mit einer NCO-Funktionalität von mehr als eins und weniger als zwei - durch Umsetzung von
   A1) Polyisocyanaten mit
   A2) polymeren Polyolen und/oder Polyaminen mit zahlenmittleren Molekulargewichten von 400 bis 8.000 g/mol,
   A3) isocyanatreaktiven, nichtionisch hydrophilierenden Verbindungen,
   A4) isocyanatreaktiven, aliphatische Gruppen enthaltenden Verbindungen,
   A5) gegebenenfalls niedermolekularen Verbindungen mit zahlenmittleren Molekulargewichten von 17 - 400 g/mol ausgewählt aus der Gruppe bestehend aus Mono- und Polyalkoholen, Mono- und Polyaminen sowie Aminoalkoholen,
   A6) gegebenenfalls isocyanatreaktiven, ionisch oder potentiell ionisch hydrophilierenden Verbindungen,
   A7) gegebenenfalls in aliphatischen Ketonen oder Estern als Lösemittel hergestellt wird,
B) die noch freien NCO-Gruppen des Prepolymers mit isocyanatreaktiven Monoaminen, Polyaminen, Hydrazin und/oder Hydraziden umgesetzt werden, so bemessen, dass ein rechnerisches molares Verhältnis der isocyanatreaktiven NH-Gruppen zu den NCO-Gruppen von 0,8 bis 1,2 erreicht wird, wobei
C) das aus Schritt A) erhaltene Prepolymer gegebenenfalls entweder in aliphatischen Ketonen oder Estern gelöst oder, sofern die Herstellung bereits in Anwesenheit von A7) durchgeführt wurde, die Prepolymerlösung gegebenenfalls durch weitere Zugabe aliphatischer Ketone oder Ester verdünnt wird.

Ausgehend vom Stand der Technik bestand die Aufgabe, einen Binder bereit zu stellen, der das Anschmutzverhalten von flexiblen Flächensubstraten, insbesondere Leder, verbessert. Der Binder soll ferner die Reinigungsfähigkeit von flexiblen Flächensubstraten, insbesondere Leder, verbessern.

Überraschenderweise wurde nun gefunden, dass Polyurethan-Polyharnstoff-Dispersionen, die aus der Umsetzung von Polyisocyanaten mit isocyanatreaktiven Verbindungen stammen, welche mindestens eine Polysiloxangruppe enthalten, diese Aufgabe lösen.

Gegenstand der Erfindung ist somit ein Verfahren zur Herstellung wässriger Polyurethan-Polyharnstoff-Dispersionen, bei denen
A) zunächst ein NCO-gruppenhaltiges Polyurethan-Prepolymer durch Umsetzung von
   A1) Polyisocyanaten mit
   A2) polymeren Polyolen und/oder Polyaminen mit zahlenmittleren Molekulargewichten von mehr als 400 bis 8.000 g/mol,
   A3) gegebenenfalls niedermolekularen Verbindungen mit zahlenmittleren Molekulargewichten von 17 - 400 g/mol ausgewählt aus der Gruppe bestehend aus Mono- und Polyalkoholen, Mono- und Polyaminen sowie Aminoalkoholen,
   A4) isocyanatreaktiven, ionisch oder potentiell ionisch hydrophilierenden Verbindungen und/oder isocyanatreaktiven nichtionisch hydrophilierenden Verbindungen,
   A5) isocyanatreaktiven Verbindungen, die mindestens eine C₇- bis C₂₄-Alkyl- oder C₇- bis C₂₄-Alkenylgruppen enthalten, und
   A6) isocyanatreaktiven Verbindungen, die mindestens eine Polysiloxangruppe enthalten
   erzeugt wird, und
B) die noch freien NCO-Gruppen des Prepolymers mit isocyanatreaktiven Monoaminen, Polyaminen, Hydrazin und/oder Hydraziden umgesetzt werden, so bemessen, dass ein rechnerisches Verhältnis der isocyanatreaktiven NH-Gruppen zu den NCO-Gruppen von 0,7 bis 1,2 erreicht wird.

Erfindungswesentlich ist die Umsetzung der Isocyanate mit isocyanatreaktiven Verbindungen, die mindestens eine Polysiloxangruppe umfassen, in Kombination mit der Umsetzung der Isocyanate mit isocyanatreaktiven Verbindungen, die mindestens eine C₇- bis C₂₄-Alkyl- oder C₇- bis C₂₄-Alkenylgruppen enthalten.

Ein weiterer Gegenstand der Erfindung ist die Verwendung der erfindungsgemäß hergestellten Polyurethan-Polyharnstoff-Dispersionen zur schmutzabweisenden und reinigungserleichternden Ausrüstung von flexiblen Flächensubstraten, insbesondere Leder.

Ein weiterer Gegenstand der Erfindung ist ein Verfahren zur schmutzabweisenden und reinigungserleichternden Ausrüstung von flexiblen Flächensubstraten, . insbesondere Leder, indem auf das flexible Flächensubstrat, insbesondere das Leder die erfindungsgemäße Polyurethan-Polyharnstoff-Dispersion aufgetragen wird.

Ein weiterer Gegenstand der Erfindung sind wässrige Polyurethan-Polyharnstoff-Dispersionen, die nach obigem Verfahren herstellbar sind.

Geeignete Polyisocyanate nach A1) haben die Formel X(NCO)ₚ, worin p eine Zahl von mehr als 1 bis 4, bevorzugt von 2 bis 3, besonders bevorzugt von 2 und X ein aliphatischer, cycloaliphatischer, aromatischer oder araliphatischer Kohlenwasserstoffrest ist. Vorzugsweise steht X für einen aliphatischen Kohlenwasserstoffrest mit 3 bis 20 Kohlenstoffatomen, einen cycloaliphatischen Kohlenwasserstoffrest mit 5 bis 15 Kohlenstoffatomen, einen aromatischen Kohlenwasserstoffrest mit 6 bis 15 Kohlenstoffatomen, oder einen araliphatischen Kohlenwasserstoffrest mit 7 bis 15 Kohlenstoffatomen. Finden Polyisocyanate der Formel X(NCO)ₚ Verwendung, die Gemische von Verbindungen mit unterschiedlicher Anzahl von Isocyanatgruppen sind, so ist p das Zahlenmittel der vorhandenen Isocyanatgruppen.

Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanatodiphenylmethan, 2,4'-Diisocyanatodiphenylmethan, p-Xylylendiisocyanat, Tetramethylxylylendiisocyanat (TMXDI), die Isomeren des 4,4'-Diisocyanatodicyclohexylmethans wie das trans/trans-, das cis/-cis- und das cis/trans-Isomere sowie aus diesen Verbindungen bestehende Gemische.

Polymere Polyole oder Polyamine gemäß A2) stammen typischerweise aus der Gruppe der hydroxyl- oder aminogruppenhaltigen Polycarbonate, Polyester, Polyether, Polyacrylate, Polyolefine und Polysiloxane, wie sie bekannt sind z. B. aus Ullmann's Encyclopedia of Industrial Chemistry 2005, DOI: 10.1002/14356007.a21_665.pub2 "Polyurethane", Kapitel 3, W. Friederichs.

Geeignete Polycarbonatpolyole sind solche, wie sie z. B. durch Umsetzung von Phosgen mit einem Überschuss an mehrwertigen Alkoholen erhalten werden können. Als zweiwertige Alkohole kommen z. B. Ethylenglykol, Propan-1,2-diol, Propan-1,3-diol, Butan-1,2-diol, Butan-1,3-diol, Butan-1,4-diol, Buten-1,4-diol, Butin-1,4-diol, Pentan-1,5-diol, Neopentylglykol, 2-Butyl-2-ethyl-1,3-propandiol, Bis(hydroxymethyl)-cyclohexane wie 1,4-Bis(hydroxy-methyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglykol, Butan-1,4-diol, Hexan-1,6-diol, Octan-1,8-diol und Dodecan-1,12-diol. Weiterhin bevorzugt sind Neopentylglykol und 2-Butyl-2-ethyl-1,3-propandiol. Anteilig können auch höherwertige Alkohole verwendet werden, wie z. B. Glycerin, Trimethylolpropan, 1,2,6-Hexantriol, 1,2,4-Butantriol, Pentaerythrit, Chinit, Mannit und Sorbit.

Ferner kommen auch Polyesterpolyole in Frage, die durch Umsetzung von mehrwertigen Alkoholen mit mehrwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z. B. Bernsteinsäure, Adipinsäure, Sebacinsäure und Dodecandicarbonsäure. Als mehrwertige Alkohole, bevorzugt Diole, kommen die als Aufbaukomponenten für die Polycarbonatpolyole genannten niedermolekularen Alkohole in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete polyfunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/oder Methyl-ε-caprolacton sowie deren Gemische. Geeignete Starterkomponenten sind z. B. die vorstehend als Aufbaukomponente für die Polycarbonatpolyole genannten niedermolekularen mehrwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Polyole Polyetherdiole in Betracht. Sie sind insbesondere durch Polymerisation von Ethylenoxid, Propylenoxid, Butylenoxid, Tetrahydrofuran, Styroloxid, Epichlorhydrin oder teilfluorierte oder perfluorierte Derivate dieser Verbindungen mit sich selbst, z. B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 1,2-Bis(4-hydroxydiphenyl)-propan oder Anilin erhältlich.

Ebenfalls geeignet sind Polyhydroxyolefine, bevorzugt solche mit 2 endständigen Hydroxylgruppen, z. B. α-,ω-Dihydroxypolybutadien, α-,ω-Dihydroxypolymethacrylester oder α-,ω-Dihydroxypolyacrylester als Monomere. Solche Verbindungen sind beispielsweise aus EP 0 622 378 A1 bekannt. Weitere geeignete Polyole sind Polyacetale, Polysiloxane und Alkyd harze.

Geeignete niedermolekulare Verbindungen nach A3) sind die vorstehend als Aufbaukomponente für die Polycarbonatpolyole genannten niedermolekularen mehrwertigen Alkohole, bevorzugt Diole und Triole.

Daneben kommen auch Monoalkohole in Betracht, bevorzugt primäre oder sekundäre Alkohole, wie z. B. Methanol, Ethanol, Propanol, Isopropanol, 1-Butanol, 2-Butanol, Isobutanol, 1-Hexanol, 1-Octanol, 2-Ethylhexanol, 1-Decanol, 1-Dodecanol, 1-Tetradecanol, 1-Hexadecanol, 1-Octadecanol und 1-Eicosanol.

Ebenfalls geeignet sind Amine oder Aminoalkohole, die man beispielsweise durch Austausch der Alkoholgruppen, der in den letzten beiden Abschnitten genannten Alkohole durch Amingruppen oder Monoalkylamingruppen, erhält.

Als ionisch oder potentiell ionisch hydrophilierende Verbindungen nach A4) werden sämtliche Verbindungen verstanden, die mindestens eine gegenüber Isocyanat reaktive Gruppe, bevorzugt Hydroxyl- oder Aminogruppe, sowie mindestens eine Funktionalität aufweisen, die ionisch oder potentiell ionisch ist. Beispiele für ionische und potentiell ionische Gruppen sind -COOY, -SO₃Y, -PO(OY)₂ (Y beispielsweise = H, NH₄⁺, Metallkation), -NR₂, -NR₃⁺ (R = H, Alkyl, Aryl). Geeignete ionisch oder potentiell ionisch hydrophilierende Verbindungen sind dem Fachmann bekannt und beispielsweise in DE 10 2004 002 526 A1 im Abschnitt [0032] genannt beziehungsweise erklärt.

Als isocyanatreaktive, nichtionisch hydrophilierende Verbindungen nach A4) werden Polyoxyalkylenether verstanden, die mindestens eine Hydroxy- oder Aminogruppe enthalten. Geeignete nichtionisch hydrophilierende Verbindungen sind dem Fachmann bekannt und in DE 10 2004 002 526 A1 in den Abschnitten [0035] bis [0039] oder auch in DE 10 2006 036220 A1 genannt beziehungsweise erklärt.

Isocyanatreaktive, Alkyl- oder Alkenylgruppen enthaltende Verbindungen nach A5) sind Verbindungen, die mindestens eine isocyanatreaktive Gruppe -wie z. B. Alkohol, Amin oder Thiol - und mindestens eine C₇- bis C₂₄-Alkyl- oder Alkenylgruppe enthalten. Dazu zählen beispielsweise Alkyl- oder Alkenylgruppen enthaltende Mono- oder Dialkohole, Mono- oder Diamine und Aminoalkohole. Ebenfalls zählen dazu Alkoxylierungsprodukte von aliphatischen Carbonsäuren, Carbonsäureamiden, Phosphorsäuremonoestern, Phosphorsäurediestern, Phosphonsäuren, Phosphonsäuremonoestern, Schwefelsäuremonoestern, Sulfonsäuren, Mono- oder Dialkoholen, Mono- oder Diaminen oder Aminoalkoholen.

In einer bevorzugten Ausführungsform enthält die Komponente A5) mindestens eine Verbindung der Formel (1) 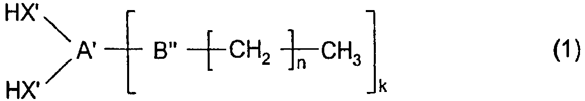 worin
- X': für O, S, NH oder NR,
- A', B": unabhängig voneinander für Kohlenwasserstoffgruppen mit 1 bis 30 Kohlenstoffatomen, die gegebenenfalls Heteroatome ausgewählt aus N, O, P und/oder S enthalten können, und die gegenüber Isocyanaten nicht reaktiv sind,
- n: für eine Zahl von 6 bis 23, bevorzugt 10 - 21, insbesondere 14 -19,
- k: für 1 oder 2 stehen.

Bevorzugt werden aliphatische Kohlenwasserstoffgruppen enthaltende Monohydroxy-, Dihydroxy- und Monoaminverbindungen verwendet. Die enthaltenen aliphatischen Kohlenwasserstoffgruppen sind bevorzugt unverzweigt. Besonders bevorzugt sind gesättigte, unverzweigte Alkylgruppen mit 11 bis 22 Kohlenstoffatomen. Insbesondere bevorzugt sind gesättigte, unverzweigte Alkylgruppen mit 15 bis 20 Kohlenstoffatomen.

Beispiele für Verbindungen nach A5) sind 1-Octanol, 1-Decanol, 1-Dodecanol, 1-Hexadecanol, 1-Octadecanol, Oleylalkohol, 1-Eicosanol, sowie deren Alkoxylate, hergestellt durch Addition von beispielsweise Ethylenoxid und/oder Propylenoxid. Bevorzugt werden Alkoxylate mit weniger als 9 Alkoxyeinheiten eingesetzt.

Weitere Beispiele sind 1-Octylamin, 1-Decylamin, 1-Dodecylamin, 1-Hexadecylamin, 1-Octadecylamin, Oleylamin, 1-Eicosylamin, sowie deren Alkoxylate, hergestellt durch Addition von beispielsweise Ethylenoxid und/oder Propylenoxid, wobei der Aminstickstoff durch die Alkoxylierung mono- und/oder disubstituiert sein kann. Bevorzugt werden Alkoxylate mit weniger als 13 Alkoxyeinheiten eingesetzt.

Verbindungen nach A5) können auch Carbonsäurealkoxylate oder Carbonsäureamidalkoxylate sein, beispielsweise hergestellt aus Octansäure, Decansäure, Dodecansäure, Hexadecansäure, Octadecansäure, Ölsäure, Eicosansäure, Octanamid, Decanamid, Dodecanamid, Hexadecanamid, Octdecanamid, Ölsäureamid oder Eicosanamid mit beispielsweise Ethylenoxid und/oder Propylenoxid. Bevorzugt werden Alkoxylate mit weniger als 10 Alkoxyeinheiten eingesetzt.

Andere Beispiele sind Alkoxylate von Monoestern oder Diestern hergestellt aus Phosphorsäure oder Monoester hergestellt aus Schwefelsäure und z. B. 1-Octanol, 1-Decanol, 1-Dodecanol, 1-Hexadecanol, 1-Octadecanol, Oleylalkohol, 1-Eicosanol und Addition von beispielsweise Ethylenoxid und/oder Propylenoxid an diese Ester. Bevorzugt werden Alkoxylate mit weniger als 10 Alkoxyeinheiten eingesetzt.

Ferner können alkoxylierte aliphatische Phosphonsäuren, Phosphonsäuremonoester und Sulfonsäuren eingesetzt werden, deren Substituenten am Phosphor beziehungsweise Schwefel als auch die Estergruppen beispielsweise 1-Octyl-, 1-Decyl-, 1-Dodecyl-, 1-Hexadecyl-, 1-Octadecyl-, Oleyl- oder 1-Eicosylgruppen sein können und deren Alkoxylierung beispielsweise mit Ethylenoxid und/oder Propylenoxid durchgeführt wurde. Bevorzugt werden Alkoxylate mit weniger als 10 Alkoxyeinheiten eingesetzt.

Auch möglich sind Monoether-z. B. 1-Octyl-, 1-Decyl-, 1-Dodecyl-, 1-Hexadecyl-, 1-Octadecyl-, Oleyl- oder 1-Eicosylether-trifunktioneller Alkohole, wie z. B. Glycerin, Trimethylolpropan, Pyrogallol, Phloroglucin und 1,2,6-Hexantriol, sowie die Alkoxylate hergestellt durch Addition von beispielsweise Ethylenoxid und/oder Propylenoxid an diese Ether. Bevorzugt werden Alkoxylate mit weniger als 10 Alkoxyeinheiten eingesetzt.

Ebenfalls verwendet werden können Monoester - z. B. mit Octansäure, Decansäure, Dodecansäure, Hexadecansäure, Octadecansäure, Ölsäure oder Eicosansäure - trifunktioneller Alkohole, wie z. B. Glycerin, Trimethylolpropan, Pyrogallol, Phloroglucin und 1,2,6-Hexantriol, sowie die Alkoxylate, hergestellt durch Addition von beispielsweise Ethylenoxid und/oder Propylenoxid an diese Ester. Bevorzugt werden Alkoxylate mit weniger als 10 Alkoxyeinheiten eingesetzt.

Ebenso können Dicarbonsäureester-z. B. mit Octansäure, Decansäure, Dodecansäure, Hexadecansäure, Octadecansäure, Ölsäure oder Eicosansäure-tetrafunktioneller Alkhole, wie z. B. Pentaerythrit, Erythritol, Threitol, oder Diglycerol, sowie die Alkoxylate, hergestellt durch Addition von beispielsweise Ethylenoxid und/oder Propylenoxid an diese Ester verwendet werden. Bevorzugt werden Alkoxylate mit weniger als 10 Alkoxyeinheiten eingesetzt.

Zusätzliche Beispiele sind Diester oder Diamide von Dihydroxydicarbonsäuren z. B. aus Weinsäure und 1-Octanol, 1-Decanol, 1-Dodecanol, 1-Hexadecanol, 1-Octadecanol, Oleylalkohol, 1-Eicosanol, 1-Octylamin, 1-Decylamin, 1-Dodecylamin, 1-Hexadecylamin, 1-Octadecylamin, Oleylamin oder 1-Eicosylamin, sowie die Alkoxylate, hergestellt durch Addition von beispielsweise Ethylenoxid und/oder Propylenoxid an diese Ester beziehungsweise Amide. Bevorzugt werden Alkoxylate mit weniger als 10 Alkoxyeinheiten eingesetzt.

Besonders bevorzugt ist, dass die Komponente A5) eine Verbindung der Formel (2) enthält

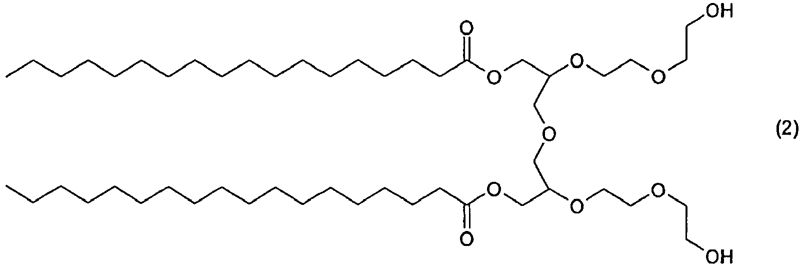

Die Bestandteile A6) sind isocyanatreaktive Verbindungen, die mindestens eine Polysiloxangruppe enthalten.

In einer bevorzugten Ausführungsform der Erfindung enthalten diese Verbindungen Polysiloxan-Struktureinheiten der Formel (3) 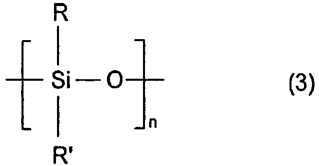 worin R und R' Kohlenwasserstoffgruppen und der Mittelwert von n 3 bis 55 sind. Weiterhin bevorzugt ist, dass R und R' Alkyl- oder Arylgruppen sind und der Mittelwert von n 3 bis 25 beträgt. Besonders bevorzugt ist, dass R und R' Methyl- oder Phenylgruppen sind und der Mittelwert von n 6 bis 20 ist.

Weiterhin bevorzugt ist, dass die Komponente A6) mindestens eine Verbindung der Formel (4) enthält 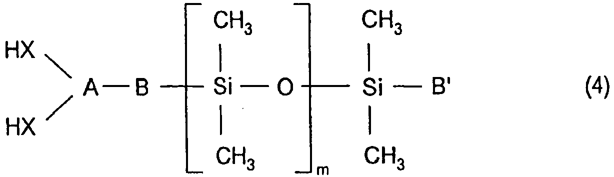 worin
- X: für O, S, NH oder NR,
- A, B, B': unabhängig voneinander für Kohlenwasserstoffgruppen mit 1 bis 30 Kohlenstoffatomen, die gegebenenfalls Heteroatome ausgewählt aus N, O, P und/oder S enthalten können, und die gegenüber Isocyanaten nicht reaktiv sind,
- m: für eine Zahl von 3 bis 55, vorzugsweise 4 bis 25, insbesondere 6 bis 20 stehen.

Im erfindungsgemäßen Verfahren werden für die Herstellung des NCO-gruppenhaltigen Polyurethan-Prepolymers vorzugsweise 10 bis 45 Gew.-% Komponente A1), 30 bis 80 Gew.-% Komponente A2), 0 bis 10 Gew.-% Komponente A3), 0,1 bis 20 Gew.-% Komponente A4), 0,1 bis 20 Gew.-% Komponente A5) und 0,1 bis 20 Gew.-% Komponente A6) zur Reaktion gebracht, wobei sich die Summe aller Komponenten zu 100 Gew.-% aufaddiert. In einer weiteren bevorzugten Ausführungsform werden mindestens 0,1 Gew.-% A3) verwendet.

Das erfindungsgemäße Verfahren umfasst im Allgemeinen einen Schritt, in dem Bestandteil A1) mit den Bestandteilen A2) bis A6) und gegebenenfalls einem Lösemittel unterhalb der Reaktionstemperatur gemischt wird. Die Reihenfolge der Zugabe des Bestandteils A1), der Bestandteile A2) bis A6) und gegebenenfalls des Lösemittels ist beliebig. Die Reaktion des Bestandteils A1) und der Bestandteile A2) bis A6) wird vorzugsweise durch Temperaturerhöhung eingeleitet. Bevorzugte Lösemittel sind Ketone oder Ester, besonders bevorzugt sind Aceton oder Methylacetat. Bevorzugt wird die Reaktion bei Temperaturen im Bereich von 50 bis 120 °C durchgeführt.

Die Reaktion des Bestandteils A1) und der Bestandteile A2) bis A6) kann in Anwesenheit eines Lösemittels oder in Substanz erfolgen. In einer bevorzugten Ausführungsform der Erfindung wird ein isocyanatgruppenhaltiges Prepolymer aus Bestandteil A1) mit den Bestandteilen A2) bis A6) in Substanz oder in Lösung hergestellt und gegebenenfalls nach Durchführung der Reaktion in Lösemitteln gelöst. Anschließend wird das Prepolymer oder die Prepolymerlösung in Wasser dispergiert. Hierbei wird bevorzugt das Prepolymer oder die Prepolymerlösung in vorgelegtes Wasser gegeben oder Wasser in die vorgelegte Prepolymerlösung gegeben und eine Kettenverlängerungsreaktion nach Schritt B) mit Polyaminen durchgeführt. Die Verlängerungsreaktion kann teilweise oder auch komplett vor dem Dispergieren erfolgen. Abschließend wird gegebenenfalls das Lösemittel abdestilliert.

Das erfindungsgemäße Verfahren zur Herstellung der wässrigen PUR-Dispersionen kann in einer oder mehreren Stufen in homogener oder - bei mehrstufiger Umsetzung - teilweise in disperser Phase durchgeführt werden. Nach vollständig oder teilweise durchgeführter Polyaddition aus A1) - A6) erfolgt ein Dispergier-, Emulgier- oder Lösungsschritt. Im Anschluss erfolgt gegebenenfalls eine weitere Polyaddition oder Modifikation in disperser Phase.

Es können im erfindungsgemäßen Verfahren die zur Beschleunigung der Isocyanatadditionsreaktion bekannten Katalysatoren, wie z. B. Triethylamin, 1,4-Diazabicyclo-[2.2.2]-octan, Dibutylzinnoxid, Zinndioktoat oder Dibutylzinndilaurat, Zinn-bis-(2-ethylhexanoat) oder andere metallorganischen Verbindungen mit vorgelegt oder später zudosiert werden.

Anschließend werden die gegebenenfalls zu Beginn der Reaktion noch nicht zugegebenen Bestandteile von A1) - A6) zudosiert.

Bei der Herstellung des Polyurethan-Prepolymers in Schritt A) beträgt das molare Stoffmengenverhältnis der Gesamtmenge von Isocyanatgruppen aus A1) zu der Gesamtmenge Isocyanat-reaktiver Gruppen aus A2) bis A6) 1,0 bis 3,5 und bevorzugt 1,2 bis 2,7.

Die Umsetzung der Komponenten A1) - A6) zum Prepolymer erfolgt teilweise oder vollständig, bevorzugt aber vollständig. Der Umsetzungsgrad wird üblicherweise durch Verfolgung des NCO-Gehalts der Reaktionsmischung überwacht. Dazu können sowohl spektroskopische Messungen, z. B. Infrarot- oder Nahinfrarot-Spektren, Bestimmungen des Brechungsindex als auch chemische Analysen, wie Titrationen, von entnommenen Proben vorgenommen werden. Es werden so Polyurethan-Prepolymere, die freie Isocyanatgruppen enthalten, in Substanz oder in Lösung erhalten.

Nach oder während der Herstellung der Polyurethan-Prepolymere aus A1) bis A6) erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie Ammoniak, Ammoniumcarbonat oder-hydrogencarbonat, Trimethylamin, Triethylamin, Tributylamin, Diisopropylethylamin, Dimethylethanolamin, Diethylethanolamin, Triethanolamin, Kaliumhydroxid oder Natriumcarbonat eingesetzt, bevorzugt Triethylamin, Triethanolamin, Dimethylethanolamin oder Diisopropylethylamin. Die molare Stoffmenge der Basen liegt zwischen 50 und 150 % und bevorzugt zwischen 85 und 120 % der Stoffmenge der anionischen Gruppen. Im Falle kationischer Gruppen werden z. B. Schwefelsäuredimethylester, Bernsteinsäure oder Ameisensäure eingesetzt. Werden nur nichtionisch hydrophilierte Verbindungen A3) mit Ethergruppen verwendet, entfällt der Neutralisationsschritt. Die Neutralisation kann auch gleichzeitig mit der Dispergierung erfolgen, indem das Dispergierwasser bereits das Neutralisationsmittel enthält.

Im folgenden Verfahrensschritt werden die Verbindungen aus B) mit den noch verbliebenen Isocyanatgruppen umgesetzt. Diese Kettenverlängerung/-terminierung kann dabei entweder in Lösungsmittel vor dem Dispergieren, während des Dispergierens oder bevorzugt in Wasser nach dem Dispergieren durchgeführt werden.

Zur Umsetzung der noch freien NCO-Gruppen in Schritt B) dienen Aminoalkohole, Mono-, Di- oder Polyamine sowie Hydrazin oder Hydrazide. Monofunktionelle Verbindungen für die Verlängerungsreaktion können Aminoalkohole und Monoamine sein, wie sie unter A3) erwähnt sind, bevorzugt Aminoalkohole oder langkettige Monoamine, wie z. B. Ethanolamin, Diethanolamin, 1-Hexylamin, 1-Octylamin, 1-Decylamin, 1-Dodecylamin, 1-Tetradecylamin, 1-Hexadecylamin, 1-Octadecylamin, 1-Eicosylamin. Als Bi- oder Polyfunktionelle Verbindungen können z. B. Ethylendiamin, 1,2- und 1,3-Diaminopropan, 1,4-Diaminobutan, 1,6-Diaminohexan, Isophorondiamin, das Isomerengemisch von 2,2,4- und 2,4,4-Trimethylhexamethylendiamin, 2-Methyl-pentamethylendiamin, Piperazin, 2,5-Dimethylpiperazin, 4,4'-Diaminocyclohexylmethan, 1,4-Diaminocyclohexan, Aminoethylethanolamin, Aminopropylethanolamin, Natrium-(2-aminoethyl)-2-aminoethylsulfonat, Diethylentriamin, Triethylentetramin, Tetraethylenpentamin, 1,3- und 1,4-Xylylendiamin, α,α,α',α'-Tetramethyl-1,3- und 1,4-xylylendiamin und 4,4'-Diaminodicyclohexylmethan, Dimethylethylendiamin, Hydrazin, Adipinsäuredihydrazid oder Oxalsäuredihydrazid verwendet werden.

Der Kettenverlängerungsgrad, also das Äquivalentverhältnis der neu zugesetzten reaktiven NH-Gruppen der zur Kettenverlängerung in B) eingesetzten Verbindungen zu freien NCO-Gruppen des Prepolymers, liegt bevorzugt zwischen 0,8 und 1,2.

Die Verbindungen B) können gegebenenfalls verdünnt mit Wasser und/oder einem Lösemittel im erfindungsgemäßen Verfahren einzeln oder in Mischungen eingesetzt werden, wobei grundsätzlich jede Reihenfolge der Zugabe möglich ist. Bevorzugt erfolgt die Herstellung der erfindungsgemäßen Polyurethan-Polyharnstoff-Dispersionen, indem das lösemittelfreie oder gelöste Prepolymer oder das kettenverlängerte Polyurethanpolymer gegebenenfalls unter starker Scherung, wie z. B. starkem Rühren, entweder in das Dispergierwasser eingetragen wird oder man rührt umgekehrt das Dispergierwasser zum Prepolymer oder Polymer oder deren Lösungen.

Die so erhaltenen Dispersionen haben einen Festkörpergehalt von 10 bis 70 Gew.-%, bevorzugt 20 bis 65 Gew.-% und besonders bevorzugt 25 bis 60 Gew.-%.

Je nach Neutralisationsgrad und Gehalt ionischer Gruppen kann die Dispersion sehr feinteilig eingestellt werden, so dass sie praktisch das Aussehen einer Lösung hat, aber auch sehr grobteilige Einstellungen sind möglich, die ebenfalls ausreichend stabil sind.

Ein weiterer Gegenstand der Erfindung sind Mischungen der erfindungsgemäßen Polyurethan-Polyharnstoff-Dispersionen mit anderen wässrigen Bindemitteln und Vernetzern, die zur Herstellung von Beschichtungsmitteln eingesetzt werden. Hierbei können auch die aus der Lacktechnologie an sich bekannten Hilfs- und Zusatzmittel wie z. B. Verdicker, Füllstoffe, Pigmente, Wachse, Griffmittel, Farbstoffe, Lösungsmittel, Verlaufshilfsmittel sowie Vernetzer verwendet werden. Besonders bevorzugte Hilfs- und Zusatzmittel sind Nanopartikel, teil- oder perfluorierte Polymere und Silikone. Insbesondere bevorzugte Hilfs- und Zusatzmittel sind solche wie sie in den folgenden Schriften beschrieben sind: DE4328917, DE102004040266, DE19649953, WO2005/078182, US6171515, US4599438, US5385999, DE4240274.

Ein weiterer Gegenstand der Erfindung sind Beschichtungen der erfindungsgemäßen Polyurethan-Polyharnstoff-Dispersionen und/oder deren oben genannten Mischungen auf beliebigen Substraten wie z. B. Metall, Holz, Glas, Glasfasern, Kohlefasern, Stein, keramische Mineralien, Beton, harte und flexible Kunststoffe der verschiedensten Arten, Gewebte und nicht gewebte Textilien, Leder, Spaltleder, Kunstleder, Papier, Hartfasern, Stroh und Bitumen, die vor der Beschichtung gegebenenfalls auch mit üblichen Grundierungen oder nach der Beschichtung mit gegebenenfalls weiteren Beschichtungen versehen werden können.

Bevorzugte Substrate sind Leder und Kunstleder. Besonders bevorzugte Substrate sind vollnarbiges und geschliffenes Leder sowie Spaltleder.

Die erfindungsgemäßen Polyurethan-Polyharnstoffe enthalten als wichtigste Strukturelemente solche der Formel (5).

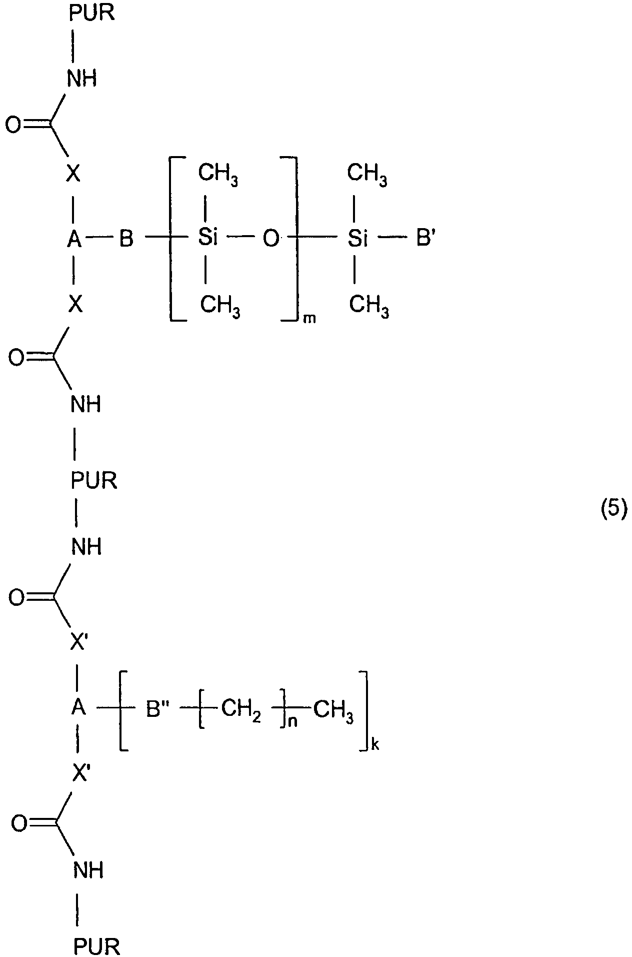

Hierbei bedeuten
- X, X': unabhängig voneinander O, S, NH, NR,
- A, A', B, B', B": unabhängig voneinander für Kohlenwasserstoffgruppen mit 1 bis 30 Kohlenstoffatomen, die gegebenenfalls Heteroatome ausgewählt aus N, O, P und/oder S enthalten können, und die gegenüber Isocyanaten nicht reaktiv sind,
- m: für eine Zahl von 3 bis 55, vorzugsweise 4 bis 25, insbesondere 6 bis 20,
- n: für eine Zahl von 6 bis 23, bevorzugt 10 - 21, insbesondere 14-19, stehen,
- PUR: den Polyurethan-Polyharnstoff, der durch die Reaktion der Komponenten A1), A2), A3), A4) und B) gebildet wird.

Setzt man die Struktureinheiten gemäß Formel (2) und (4) ein, so erhält man für X = O eine Struktur der Formel (6)

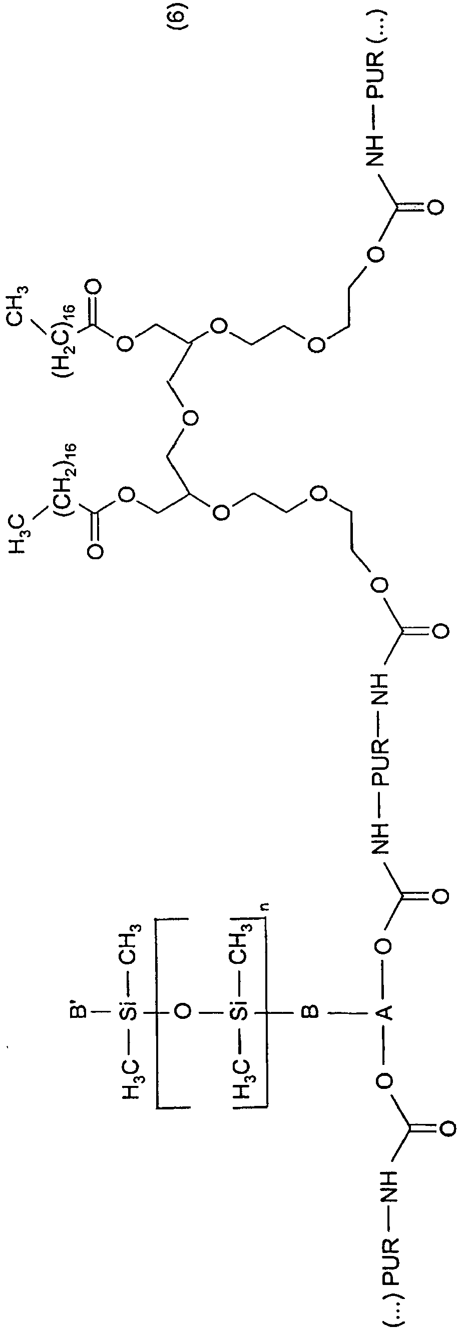

### BEISPIELE

### Vergleichsbeispiel PU-1:

190,3 g (95 mmol) Polycarbonatdiol auf Basis von Hexandiol (OHZ = 56) und 14,1 g (105 mmol) Dimethylolpropionsäure werden bei 60 °C vorgelegt und 85,5 g (385 mmol) Isophorondiisocyanat zugegeben. Die Mischung wird 3 h bei ca. 90 °C gerührt. Der NCO-Wert beträgt danach 5,26 % (rechnerischer NCO-Wert: 5,36 %). Zu diesem Prepolymer werden 150 g Methylacetat gegeben und die Lösung auf 30 °C abkühlt. Anschließend werden 10,6 g (105 mmol) Triethylamin zugegeben und 484 g kaltes Wasser unter starkem Rühren innerhalb von 5 min in die Prepolymerlösung gegeben und weitere 10 min gerührt. Zu der erhaltenen Dispersion gibt man innerhalb von 5 min eine Lösung von 8,62 g (172,4 mmol) Hydrazinmonohydrat (entspricht 95% der rechnerisch notwenigen Diaminmenge) in 50 g Wasser und rührt 10 min nach. Anschließend wird das Methylacetat unter Vakuum abdestilliert und der Feststoffgehalt mit Wasser auf 35 Gew.-% eingestellt.

### Erfindungsgemäßes Beispiel PU-2:

190,3 g (95 mmol) Polycarbonatdiol auf Basis von Hexandiol (OHZ = 56), 17,4 g (130 mmol) Dimethylolpropionsäure, 15,0 g (15 mmol) α-((3-(2,2-Bis(hydroxymethyl)-butoxy)-propyl)-dimethylsilyl-ω-((butyldimethylsilyl)-oxy)-poly(dimethylsiloxan) mit einem Molekulargewicht von 1.000 g/mol und 18,8 g (21,5 mmol) Diglyceroldistearat, ethoxyliert mit durchschnittlich 4 Ethylenoxideinheiten, werden bei 60 °C vorgelegt und 108,8 g (490 mmol) Isophorondiisocyanat zugegeben. Die Mischung wird 3 h bei ca. 90 °C gerührt. Der NCO-Wert beträgt danach 5,03 % (rechnerischer NCO-Wert: 5,50 %). Zu diesem Prepolymer werden 200 g Methylacetat gegeben und die Lösung auf 30 °C abkühlt. Anschließend werden 13,6 g (135 mmol) Triethylamin zugegeben und 577 g kaltes Wasser unter starkem Rühren innerhalb von 5 min in die Prepolymerlösung gegeben und weitere 10 min gerührt. Zu der erhaltenen Dispersion gibt man innerhalb von 5 min eine Lösung von 10,0 g (199,7 mmol) Hydrazinmonohydrat (entspricht 95 % der rechnerisch notwenigen Diaminmenge) in 50 g Wasser und rührt 10 min nach. Anschließend wird das Methylacetat unter Vakuum abdestilliert und der Feststoffgehalt mit Wasser auf 35 Gew.-% eingestellt.

Zum Vergleich des Anschmutzverhaltens und des Reinigungsverhaltens werden Leder verwendet, die bereits mit einer für Automobilleder handelsüblichen Grundierungsbeschichtung und einer beigefarbenen Farbbeschichtung zugerichtet sind.

Als Topcoat werden folgende Mischungen mittels einer Spritzapplikation aufgetragen:

### Topcoat T1:

500 g Wasser, 360 g PU-1, 40 g wasserdispergierbarer isocyanatgruppenhaltiger Vernetzer mit einer Isocyanat-Funktionalität von > 3.

### Topcoat T2:

500 g Wasser, 360 g PU-2, 40 g wasserdispergierbarer isocyanatgruppenhaltiger Vernetzer mit einer Isocyanat-Funktionalität von > 3.

Die Applikation von T1 beziehungsweise T2 erfolgt durch zweimaliges Aufspritzen mit einer Sprühpistole, so dass sich jeweils ca. 15 g/m² des nicht getrockneten Topcoats auf dem Leder befinden. Zwischen den beiden Sprühapplikationen wird die Beschichtung in einem Trockenkanal getrocknet.

Die Untersuchung der Anschmutzbarkeit und des Reinigungsverhaltens erfolgt nach folgendem Prüfblatt des Verbandes der Automobilindustrie: "VDA 230-212 - Leder, Kunststoffbahnenwaren und Textilien für Kraftfahrzeuge - Bestimmung des Anschmutz- und Reinigungsverhaltens - Verfahren mit Anschmutzgewebe". Bestandteil dieses Prüfblattes ist die Beurteilung des Verschmutzungsgrades nach ISO 105-A03 (Graumaßstab), wobei die angeschmutzten Kuppen mit bloßem Auge bewertet werden im Vergleich zum nicht angeschmutzten Leder. Der Grad der Verschmutzung wird in einer Skala von 1 (stark angeschmutzt) bis 5 (nicht angeschmutzt) angegeben. Die Bewertung der Anschmutzbarkeit erfolgt direkt nach Durchführung der Anschmutzung. Zur Bewertung des Reinigungsverhaltens wird das Teststück 24 Stunden nach der Anschmutzung dem Prüfblatt entsprechend gereinigt und erneut bewertet.

Ein Leder, das mit T1 behandelt wurde, erreicht einen Grad der Verschmutzung von 1. Nach der Reinigung beträgt der Grad der Verschmutzung 2.

Ein Leder, das mit T2 behandelt wurde, erreicht einen Grad der Verschmutzung von 2-3. Nach der Reinigung beträgt der Grad der Verschmutzung 4.

## Patentansprüche

1. Verfahren zur Herstellung wässriger Polyurethan-Polyharnstoff-Dispersionen, bei denen
A) zunächst ein NCO-gruppenhaltiges Polyurethan-Prepolymer durch Umsetzung von
A1) Polyisocyanaten mit
A2) polymeren Polyolen und/oder Polyaminen mit zahlenmittleren Molekulargewichten von mehr als 400 bis 8.000 g/mol,
A3) gegebenenfalls niedermolekularen Verbindungen mit zahlenmittleren Molekulargewichten von 17 - 400 g/mol ausgewählt aus der Gruppe bestehend aus Mono- und Polyalkoholen, Mono- und Polyaminen sowie Aminoalkoholen,
A4) isocyanatreaktiven, ionisch oder potentiell ionisch hydrophilierenden Verbindungen und/oder isocyanatreaktiven nichtionisch hydrophilierenden Verbindungen,
A5) isocyanatreaktiven Verbindungen, die mindestens eine C₇- bis C₂₄-Alkyl- oder C₇- bis C₂₄-Alkenylgruppe enthalten, und
A6) isocyanatreaktiven Verbindungen, die mindestens eine Verbindung der Formel (4) enthalten 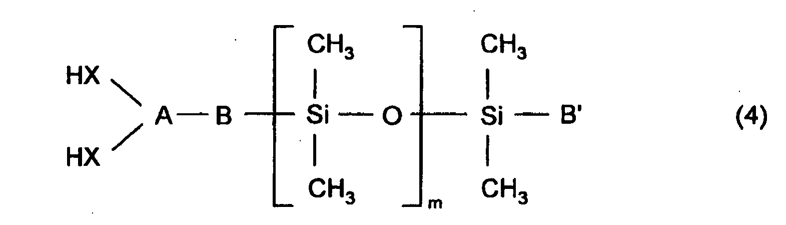 worin
X für O, S, NH oder NR,
A, B, B' unabhängig voneinander für Kohlenwasserstoffgruppen mit 1 bis 30 Kohlenstoffatomen, die gegebenenfalls Heteroatome ausgewählt aus N, O, P und/oder S enthalten können, und die gegenüber Isocyanaten nicht reaktiv sind,
m für eine Zahl von 3 bis 55 stehen,
und worin die durch die Komponente A6) eingeführten Polysiloxangruppen als Seitenketten vorliegen, erzeugt wird, und
B) die noch freien NCO-Gruppen des Prepolymers mit isocyanatreaktiven Monoaminen, Polyaminen, Hydrazin und/oder Hydraziden umgesetzt werden, so bemessen, dass ein rechnerisches Verhältnis der isocyanatreaktiven NH-Gruppen zu den NCO-Gruppen von 0,7 bis 1,2 erreicht wird.

2. Verfahren gemäß Anspruch 1, worin die durch die Komponente A5) eingeführten C₇- bis C₂₄-Alkyl- oder C₇- bis C₂₄-Alkenylgruppen als Seitenketten vorliegen.

3. Verfahren gemäß Anspruch 1 und/oder 2, worin
C) das aus Schritt A) erhaltene Prepolymer entweder in aliphatischen Ketonen oder Estern hergestellt und/oder nach der Umsetzung in Schritt A) in aliphatischen Ketonen oder Estern gelöst bzw. verdünnt wird.

4. Verfahren gemäß einem oder mehreren der Ansprüche 1 - 3, worin die Komponenten A1) Diisocyanate sind.

5. Verfahren gemäß einem oder mehreren der Ansprüche 1 - 4, worin die Komponenten A1) aliphatische Diisocyanate sind.

6. Verfahren gemäß einem oder mehreren der Ansprüche 1 - 5, worin die Komponenten A2) bis A6) molar zu mehr als 95 % aus Verbindungen bestehen, die eine oder zwei gegenüber Isocyanat reaktive Gruppen besitzen, wobei Carbonsäuregruppen als nicht reaktiv gegenüber Isocyanat betrachtet werden.

7. Verfahren gemäß einem oder mehreren der Ansprüche 1 - 6, worin das NCO-gruppenhaltige Polyurethan-Prepolymer durch die Reaktion von 10 bis 45 Gew.-% Komponente A1), 30 bis 80 Gew.-% Komponente A2), 0 bis 10 Gew.-% Komponente A3), 0,1 bis 20 Gew.-% Komponente A4), 0,1 bis 20 Gew.-% Komponente A5) und 0,1 bis 20 Gew.-% Komponente A6) erhalten wird, wobei sich die Summe aller genannten Komponenten zu 100 Gew.-% aufaddiert.

8. Verfahren gemäß einem oder mehreren der Ansprüche 1 - 7, worin die Verbindungen nach A5) mindestens eine unverzweigte Alkyl- oder Alkenylkette von 7 bis 24 Kohlenstoffen enthalten.

9. Verfahren gemäß Anspruch 8, worin die Verbindungen nach A5) mindestens eine unverzweigte, gesättigte Alkylkette von 11 bis 22 Kohlenstoffen enthalten.

10. Verfahren gemäß Anspruch 9, worin die Verbindungen nach A5) mindestens eine unverzweigte, gesättigte Alkylkette von 15 bis 20 Kohlenstoffen enthalten.

11. Verfahren gemäß einem oder mehreren der Ansprüche 1 - 10, worin in den Verbindungen nach A6) m für eine Zahl von 4 bis 25 steht.

12. Verfahren gemäß einem oder mehreren der Ansprüche 1 - 10, worin in den Verbindungen nach A6) m für eine Zahl von 6 bis 20 steht.

13. Wässrige Polyurethan-Polyharnstoff-Dispersionen, erhältlich nach dem Verfahren gemäß einem der Ansprüche 1 bis 12.

14. Verwendung wässriger Polyurethan-Polyharnstoff-Dispersionen gemäß Anspruch 13 zur Herstellung von Beschichtungen.

15. Beschichtungen erhältlich aus wässrigen Polyurethan-Polyharnstoff-Dispersionen gemäß Anspruch 14.

16. Substrate, beschichtet mit Beschichtungen nach Anspruch 15.

17. Flexible Flächensubstrate, beschichtet mit Beschichtungen nach Anspruch 15.

18. Substrate gemäß Anspruch 17, worin das Substrat Leder oder Kunstleder ist.

19. Substrate gemäß Anspruch 18, worin das Leder ein vollnarbiges, geschliffenes oder Spaltleder ist.

## Claims

1. Method for the production of aqueous polyurethane-polyurea dispersions in which
A) firstly, a polyurethane prepolymer containing NCO-groups is generated by conversion of
A1) polyisocyanates with
A2) polymer polyols and/or polyamines having number average molecular weights of more than 400 to 8,000 g/mol,
A3) if necessary, low molecular weight compounds having number average molecular weights of 17 - 400 g/mol, selected from the group consisting of mono- and polyalcohols, mono- and polyamines as well as amino alcohols,
A4) isocyanate-reactive, ionic or potentially ionic hydrophilising compounds and/or isocyanate-reactive, non-ionic hydrophilising compounds,
A5) isocyanate-reactive compounds, which contain at least one C₇- to C₂₄-alkyl or C₇- to C₂₄-alkenyl group, and
A6) isocyanate-reactive compounds, which contain at least one compound of the formula (4) 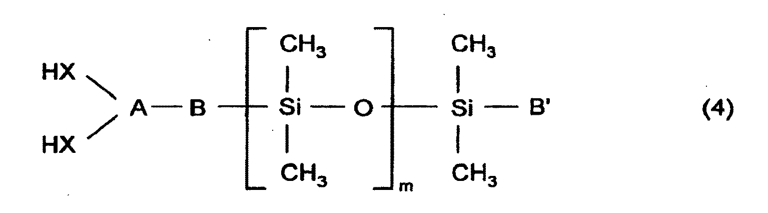 wherein
X stands for O, S, NH or NR
A, B, B' independently from one another, stand for hydrocarbon groups with 1 to 30 carbon atoms, which if necessary can contain heteroatoms selected from N, O, P and/or S, and which are not reactive with isocyanates,
M stands for a number from 3 to 55,
and wherein the polysiloxane groups introduced by component A6) are present as side chains, and
B) the still free NCO-groups of the prepolymer are converted with isocyanate-reactive monoamines, polyamines, hydrazine and/or hydrazides, measured such that a calculated ratio of the isocyanate-reactive NH-groups to the NCO-groups is achieved of 0.7 to 1.2.

2. Method according to claim 1, wherein the C₇- to C₂₄-alkyl or C₇- to C₂₄-alkenyl groups introduced by the component A5) are present as side chains.

3. Method according to claim 1 and/or 2, wherein
C) the prepolymer obtained from step A) is produced either in aliphatic ketones or esters and/or is dissolved or diluted in aliphatic ketones or esters after the conversion in step A).

4. Method according to one or more of claims 1 - 3, wherein the components A1) are diisocyanates.

5. Method according to one or more of claims 1 - 4, wherein the components A1) are aliphatic diisocyanates.

6. Method according to one or more of claims 1 - 5, wherein the components A2) to A6) consist in molar terms of more than 95 % of compounds which have one or two groups that are reactive toward isocyanate, wherein carboxylic acid groups are not considered as reactive toward isocyanate.

7. Method according to one or more of claims 1 - 6, wherein the polyurethane prepolymer containing NCO-groups is obtained by the reaction of 10 to 45 % by weight of component A1), 30 to 80 % by weight of component A2), 0 to 10 % by weight of component A3), 0.1 to 20 % by weight of component A4), 0.1 to 20 % by weight of component A5) and 0.1 to 20 % by weight of component A6), wherein the sum of all mentioned components adds up to 100 % by weight.

8. Method according to one or more of claims 1 - 7, wherein the compounds according to A5) contain at least one unbranched alkyl or alkenyl chain of 7 to 24 carbons.

9. Method according to claim 8, wherein the compounds according to A5) contain at least one unbranched, saturated alkyl chain of 11 to 22 carbons.

10. Method according to claim 9, wherein the compounds according to A5) contain at least one unbranched, saturated alkyl chain of 15 to 20 carbons.

11. Method according to one or more of claims 1 - 10, wherein in the compounds according to A6), m stands for a number from 4 to 25.

12. Method according to one or more of claims 1 - 10, wherein in the compounds according to A6), m stands for a number from 6 to 20.

13. Aqueous polyurethane-polyurea dispersions, obtainable according to the method according to one of claims 1 to 12.

14. Use of aqueous polyurethane-polyurea dispersions according to claim 13 for the production of coatings.

15. Coatings, obtainable from aqueous polyurethane-polyurea dispersions according to claim 14.

16. Substrates, coated with coatings according to claim 15.

17. Flexible surface substrates, coated with coatings according to claim 15.

18. Substrates according to claim 17, wherein the substrate is leather or artificial leather.

19. Substrate according to claim 18, wherein the leather is a full grain, buffer or split leather.

## Revendications

1. Procédé pour la préparation de dispersions aqueuses de polyuréthane et de polyurée, dans lequel on produit
A) tout d'abord, un prépolymère de polyuréthane contenant des groupes NCO- par transformation
A1) de polyisocyanates avec
A2) des polyols polymères et/ou des polyamines ayant des poids moléculaires moyens en nombre de plus de 400 à 8000 g/mol,
A3) le cas échéant, des composés de faible poids moléculaire ayant des poids moléculaires moyens en nombre de 17 à 400 g/mole choisis dans le groupe constitué par les mono-et poly-alcools, les mono-et polyamines et les amino-alcools,
A4) des composés hydrophilisants ioniques ou potentiellement ioniques réagissant avec les isocyanates et/ou des composés hydrophilisants non ioniques réagissant avec les isocyanates,
A5) des composés réagissant avec les isocyanates lesquels contiennent au moins un groupe alkyle en C₇ à C₂₄ ou un groupe alcényle en C₇-C₂₄, et
A6) des composés réagissant avec les isocyanates contenant au moins un composé de formule (4): 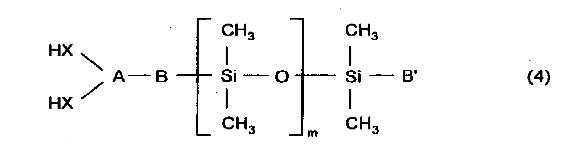 formule dans laquelle :
X est O, S, NH ou NR,
A, B, B' sont, indépendamment les uns des autres, des groupes hydrocarbonés comprenant 1 à 30 atomes de carbone, qui peuvent contenir des hétéroatomes choisis parmi N, O, P et/ou S, et qui ne réagissent pas avec les isocyanates,
m est un nombre de 3 à 55
et où les groupes polysiloxane amenés par les composants A6 sont présents sous forme de chaînes latérales, et
B) on transforme les groupes NCO encore libres du prépolymère avec des mono-amines, polyamines, hydrazine et/ou hydrazides réagissant avec les isocyanates, en proportions permettant d'obtenir un rapport calculé «groupes NH réagissant avec les isocyanates/groupes NCO» de 0,7 à 1,2.

2. Procédé selon la revendication 1, dans lequel les groupes alkyle en C₇ à C₂₄ ou groupes alcényles en C₇-C₂₄, apportés par le composant A5) sont présents en tant que chaînes latérales.

3. Procédé selon la revendication 1 ou 2, dans lequel
C) le prépolymère obtenu à l'étape A) est préparé soit dans des cétones ou des esters aliphatiques et/ou après la transformation dans l'étape A) est dilué dans des cétones ou esters aliphatiques ou combiné avec des cétones ou des esters aliphatiques.

4. Procédé selon une ou plusieurs des revendications 1 à 3, dans lequel les composants A1) sont des diisocyanates.

5. Procédé selon une ou plusieurs des revendications 1 à 4, dans lequel les composants A1) sont des diisocyanates aliphatiques.

6. Procédé selon une ou plusieurs des revendications 1 à 5, dans lequel les composants A2) à A6) consistent pour plus de 95% molaire en composants contenant un ou deux groupes réactifs avec les isocyanates, dans lesquels les groupes acides carboxyliques sont considérés comme non-réactifs avec l'isocyanate.

7. Procédé selon une ou plusieurs des revendications 1 à 6, dans lequel le prépolymère de polyuréthane contenant les groupes NCO est obtenu par réaction de 10 à 45% en poids du composant A1), 30 à 80% en poids du composant A2), 0 à 10% en poids de composant A3), de 0,1 à 20% en poids du composant A4), de 0,1 à 20% en poids du composant A5) et de 0,1 à 20% en poids du composant A6), la somme additionnée de la teneur en ces composants formant 100% en poids.

8. Procédé selon une ou plusieurs des revendications 1 à 7, dans lequel les composés A5) comprennent au moins une chaine alkyle ou alcényle non ramifiée formée de 7 à 24 atomes de carbone.

9. Procédé selon la revendication 8, dans lequel les composés A5) comprennent au moins une chaîne alkyle saturée non ramifiée formée de 11 à 22 atomes de carbone.

10. Procédé selon la revendication 9, dans lequel les composés A5) comprennent au moins une chaîne alkyle saturée non ramifiée formée de 15 à 20 atomes de carbone.

11. Procédé selon une ou plusieurs des revendications 1 à 10, dans lequel dans les composés A6), m correspond à un chiffre de 4 à 25.

12. Procédé selon une ou plusieurs des revendications 1 à 10, dans lequel dans les composés A6), m correspond à un chiffre de 6 à 20.

13. Dispersions aqueuses de polyuréthane et de polyurée pouvant être obtenues par le procédé selon l'une quelconque des revendications 1 à 12.

14. Utilisation de dispersions aqueuses de polyuréthane et de polyurée selon la revendication 13 pour la réalisation de revêtements.

15. Revêtements pouvant être obtenus à partir de dispersions aqueuses de polyuréthane et de polyurée selon la revendication 14.

16. Substrats revêtus de revêtements selon la revendication 15.

17. Substrats plats flexibles revêtus de revêtements selon la revendication 15.

18. Substrats selon la revendication 17, dans lequel le substrat est du cuir ou du similicuir.

19. Substrats selon la revendication 18, dans lequel le cuir est un cuir pleine fleur, un cuir poncé ou un cuir refendu.
